# FASCICULE DE BREVET EUROPEEN

(11) **EP 1 559 877 B1**
(45) Date de publication et mention de la délivrance du brevet: **08.05.2019**
(21) Numéro de dépôt: 04293085.9
(22) Date de dépôt: 22.12.2004
(51) Int. Cl.: F01N 1/08, F01N 3/05, F01N 13/02, F01N 13/16, F01N 13/18, F01N 13/20, F01N 1/00, F01N 1/10, F01N 1/22

(54) **Silencieux pour ligne d'échappement d'un moteur de véhicule et son procédé de montage**
Schalldämpfer für Abgasleitung eines Kraftfahrzeugmotors und Verfahren zur Montage
Muffler for exhaust line of an engine vehicle and mounting method

(30) Priorité: 30.01.2004 FR 0400894
(43) Date de publication de la demande: 03.08.2005
(73) Titulaire: HUTCHINSON, 75008 Paris (FR)
(72) Inventeur: Simon, Jean-Michel, 92320 Chatillon (FR)
(74) Mandataire: Gevers & Orès

(56) Documents cités:
- EP-A- 0 855 496
- EP-A- 1 030 965
- EP-A- 1 344 969
- WO-A-01/69051
- GB-A- 256 066
- GB-A- 968 347
- US-A- 2 718 273
- US-A- 3 422 855
- US-A- 4 164 266
- US-B1- 6 543 577

## Description

L'invention concerne un silencieux pour une ligne d'échappement d'un moteur de véhicule, ainsi que son procédé de montage.

Selon l'art antérieur, une ligne d'échappement comprend successivement à partir du collecteur d'échappement du groupe moto-propulseur du véhicule, un flexible de découplage, un pot catalytique et/ou un filtre à particules, et souvent deux silencieux. Un silencieux de ligne d'échappement présente un volume important (h = 150mm x L = 400mm x I = 200mm par exemple) et est fixé à la caisse du véhicule par des suspentes élastiques, ce qui aboutit à de fortes contraintes d'encombrement.

EP 0 855 496 décrit un silencieux pour une ligne d'échappement selon le préambule de la revendication 1.

Un but de l'invention est de concevoir une ligne d'échappement avec un nouveau type de silencieux qui permette de réduire le poids, le prix et l'encombrement pour pallier les inconvénients d'une ligne d'échappement classique.

A cet effet, l'invention propose un silencieux pour une ligne d'échappement d'un moteur de véhicule, qui est caractérisé en ce qu'il est constitué par au moins un conduit qui agit comme guide pour les gaz d'échappement et comme atténuateur acoustique pour les bruits d'échappement, et qui comprend au moins un élément tubulaire métallique interne poreux, un matelas intermédiaire d'isolation thermique et acoustique, et une couche externe en un matériau polymère, et en ce que l'enveloppe externe se raccorde de manière étanche à deux dispositifs tubulaires métalliques de raccordement par deux coiffes métalliques longues et de faible épaisseur.

L'élément tubulaire métallique interne peut être constitué par un ressort plat à spires recouvrantes, par un agrafé simple ou double, ou par un tube métallique souple ou rigide, chacun de ces éléments pouvant être percé d'ouvertures pour des raisons acoustiques.

Selon l'invention, l'élément tubulaire interne peut être revêtu d'un tissu réfractaire ayant une certaine porosité, ce tissu réfractaire pouvant être en fibres de céramique, de basalte ou de verre.

Le conduit, qui peut être souple, peut comprendre également des volumes annulaires étanches qui sont ménagés longitudinalement dans le matelas d'isolation thermique et acoustique, chaque volume intermédiaire étanche étant délimité par deux anneaux de compression, chaque anneau de compression étant élastique et réalisé en silicone par exemple.

Le conduit peut également comprendre des chicanes acoustiques qui sont interposées dans l'élément tubulaire interne.

D'une manière générale, pour réduire la température des gaz d'échappement, on peut placer en entrée du conduit un dispositif tubulaire de raccordement métallique présentant des ailettes de refroidissement externes et/ou internes, et/ou en sortie du conduit un dispositif formant diffuseur.

Selon un mode de réalisation du silencieux conforme à l'invention, l'enveloppe externe du conduit peut former une boîte traversée par l'élément métallique interne, le matelas d'isolation thermique et acoustique remplissant ladite boîte dans laquelle l'élément métallique interne peut former au moins un coude.

Avantageusement, la paroi de la boîte présente au moins une surface de résonance sous la forme d'une membrane par exemple dont la ou les fréquences propres correspondent à certaines des fréquences du spectre de fréquence à atténuer.

L'invention concerne également un procédé de montage d'un silencieux selon l'invention dans une ligne d'échappement de véhicule motorisé, ce procédé consistant à le fabriquer, le stocker et le transporter sous une forme rectiligne, et à le déformer suivant une figure géométrique donnée sur son lieu de montage au niveau d'ondulations formées par l'enveloppe externe du conduit.

D'autres avantages, caractéristiques et détails de l'invention ressortiront du complément de description qui va suivre en référence à des dessins annexés, donnés uniquement à titre d'exemple et dans lesquels :
- la figure 1 est une vue en perspective d'une ligne d'échappement selon l'art antérieur évoqué en préambule ;
- la figure 2 est une vue en perspective d'une ligne d'échappement avec un silencieux conforme à l'invention ;
- la figure 3 est une vue en coupe longitudinale partielle d'un mode de réalisation du silencieux de la figure 2 avec un conduit souple comprenant au moins un élément tubulaire interne, un matelas d'isolation thermique et acoustique, et une enveloppe externe ;
- les figures 4a à 4e montrent d'une manière schématique des variantes de réalisation de l'élément tubulaire interne du conduit souple de la figure 3 ;
- la figure 5 est une vue en coupe d'un mode de réalisation de l'enveloppe externe du conduit ;
- la figure 6 est une vue en coupe longitudinale partielle pour illustrer des anneaux de compression montés dans le matelas d'isolation thermique et acoustique du conduit de la figure 3 ;
- la figure 7 est une vue en coupe longitudinale partielle pour illustrer des chicanes acoustiques interposées dans l'élément tubulaire interne du conduit de la figure 3 ;
- la figure 8 est une vue en coupe longitudinale partielle d'un dispositif assurant l'entrée des gaz d'échappement dans le conduit de la figure 3 ;
- la figure 8a est une vue selon la flèche Villa de la figure 8 ;
- la figure 9 est une vue en coupe longitudinale d'un dispositif assurant la sortie des gaz d'échappement du conduit de la figure 3,
- la figure 10 est une variante de réalisation de la figure 9 ;
- la figure 10a est une vue en coupe suivant la ligne Xa-Xa de la figure 10 ;
- la figure 11 illustre schématiquement un autre mode de réalisation du conduit selon l'invention,
- la figure 12 est une vue en perspective de la figure 11 ; et
- les figures 13 et 14 sont des vues en perspective pour illustrer un procédé de montage d'un silencieux selon l'invention.

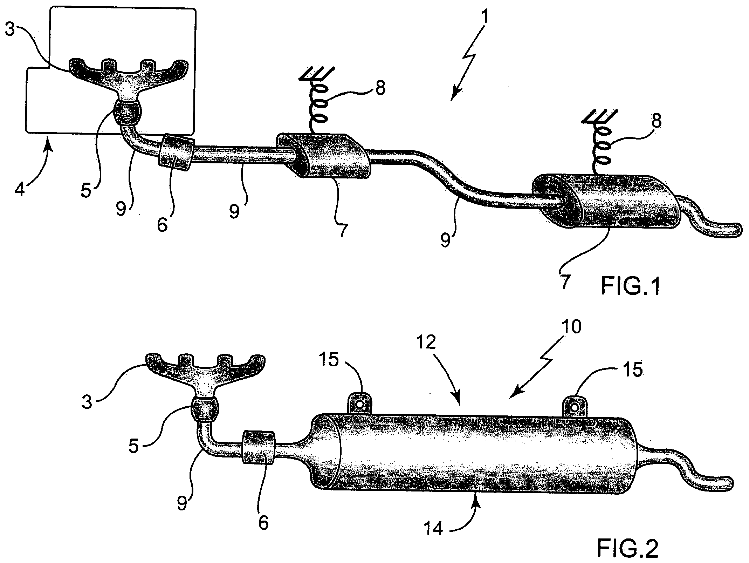

La ligne d'échappement 1 illustrée à la figure 1 représente l'état de la technique évoqué en préambule, cette ligne 1 comprenant successivement à partir d'un collecteur d'échappement multitube 3 en sortie du groupe moto-propulseur 4, un flexible de découplage 5, un pot catalytique 6 et deux silencieux rigides 7 fixés à la caisse du véhicule par des suspentes élastiques 8 et reliés entre eux par des tubes 9 en acier inoxydable.

Dans la ligne d'échappement 10 selon l'invention et telle qu'illustrée à la figure 2, les deux silencieux 7 ont été supprimés et remplacés par au moins un silencieux 12 constitué d'un conduit 14 qui est fixé par des pattes de fixation rigides 15 à la caisse du véhicule et qui agit comme guide pour les gaz d'échappement et comme atténuateur acoustique pour les bruits d'échappement, comme cela va être décrit ci-après en référence aux figures 2 à 9.

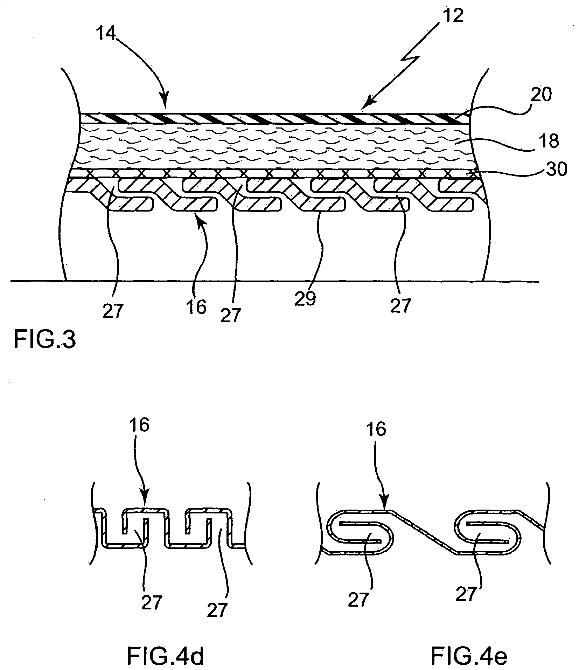

Selon un mode de réalisation de l'invention illustré à la figure 3, le conduit 14 est constitué par au moins un élément tubulaire interne 16 qui est poreux, un matelas d'isolation thermique et acoustique 18, et une enveloppe externe 20 souple et étanche en un matériau élastomère qui tient à haute température, cette enveloppe 20 pouvant être réalisée à base d'un matériau thermoplastique tel du PA 66, ou à base d'un matériau élastomère tel du VAMAC® ou un silicone par exemple.

D'une manière générale, le conduit 14 est constitué par au moins un élément tubulaire interne 16 de type souple ou rigide qui est de préférence métallique pour supporter la température des gaz d'échappement, et qui est poreux notamment pour des raisons acoustiques. La porosité de l'élément tubulaire interne 16 est obtenue par le percement d'ouvertures sur sensiblement toute sa longueur.

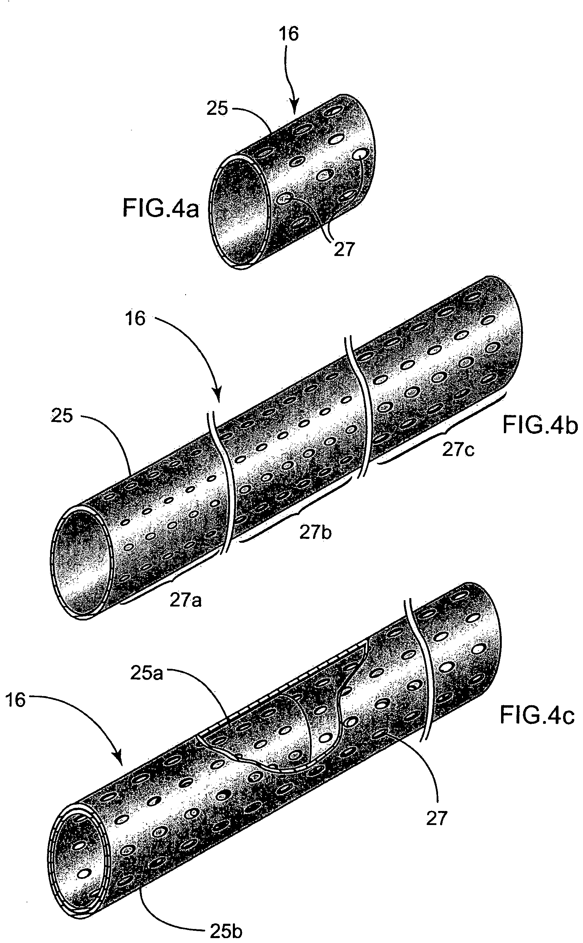

A titre d'exemple illustré sur la figure 4a, l'élément tubulaire interne 16 est constitué par un tube métallique 25 percé d'ouvertures 27. Avantageusement, les ouvertures 27 peuvent être formées par plusieurs séries d'ouvertures, par exemple au nombre de trois 27a, 27b et 27c, qui ont des sections de passage ou diamètres respectivement croissants dans le sens de l'écoulement du flux des gaz d'échappement, pour éviter notamment des risques de recirculation du flux des gaz d'échappement dans le matelas 18, comme cela est illustré sur la figure 4b. Ces trois séries d'ouvertures 27a, 27b et 27c ont par exemple des diamètres de 1mm, 2mm et 3mm, respectivement. Selon une première variante de réalisation illustrée à la figure 4c, l'élément tubulaire interne 16 est constitué de deux tubes concentriques interne 25a et externe 25b, le tube interne 25a ne s'étendant par exemple que sur une partie de la longueur du silencieux, de l'ordre de 5 à 30% par exemple, pour créer des interférences aptes à détruire les ondes sonores de l'écoulement du flux des gaz d'échappement. Selon une deuxième variante de réalisation de l'invention, l'élément tubulaire interne 16 est constitué par un agrafé simple (figure 4d), par un agrafé double (figure 4e) ou par un ressort plat à spires recouvrantes (figure 3), tous ces éléments présentant des passages de communication indépendamment d'ouvertures supplémentaires qui peuvent être percées comme dans le cas de tubes métalliques des figures 4a ou 4b.

Dans le mode de réalisation d'un silencieux selon l'invention illustré à la figure 3, l'élément tubulaire interne 16 est réalisé sous la forme d'un ressort plat 29 à spires recouvrantes, mais cet élément 16 peut être remplacé par celui selon l'un des modes de réalisation des figures 4a à 4e. Avantageusement, un tissu réfractaire 30 peut être enroulé sur tout ou partie de l'élément tubulaire interne 16, ce tissu présentant une porosité suffisante pour permettre l'amortissement des ondes acoustiques par le matelas 18 mais tout en limitant le passage direct des gaz d'échappement vers le matelas 18 pour éviter d'endommager l'enveloppe externe 20. Ce tissu 30 peut être réalisé en fibres de céramique, de basalte ou de verre par exemple.

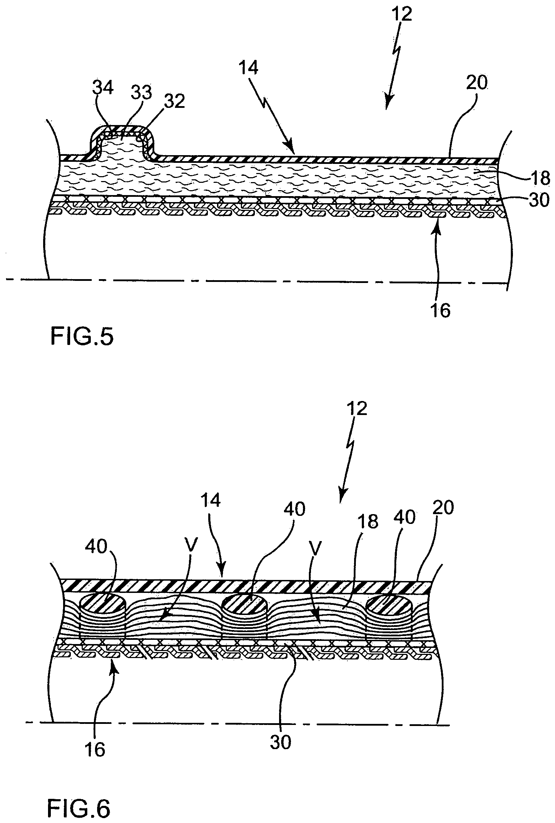

Dans le mode de réalisation illustré à la figure 5, le conduit 14 peut présenter au moins une excroissance 32 en saillie qui est formée au niveau de son enveloppe externe 20 pour créer un volume supplémentaire 33 qui est rempli par le matériau formant le matelas 18. Avantageusement, on peut loger une garniture absorbante 34 à très faible indice de réflexion sur la paroi interne de l'excroissance 32 pour obtenir une meilleure absorption du bruit. Cela est rendu possible par le faible niveau de la température au niveau de l'excroissance 32, ce qui serait impossible à concevoir avec un silencieux métallique selon l'art antérieur. La garniture 34 peut être réalisée en une mousse alvéolée de silicone par exemple.

Dans le mode de réalisation illustré à la figure 6, on prévoit des anneaux de compression 40 dans le matelas 18 pour le comprimer et délimiter ainsi plusieurs volumes V adaptés aux fréquences à combattre. Ces anneaux 40 sont élastiques, espacés régulièrement les uns des autres, réalisés en silicone par exemple, et viennent en appui sur l'enveloppe externe 20. Ainsi, la compression du matériau isolant d'un côté et l'appui sur l'enveloppe externe 20 de l'autre côté, permettent de délimiter un volume étanche V qui crée un volume de résonance acoustique. De tels anneaux 40 créent ainsi une zone incompressible et supportent le poids de l'élément tubulaire interne 16 sans aucun risque de fluage du matériau isolant.

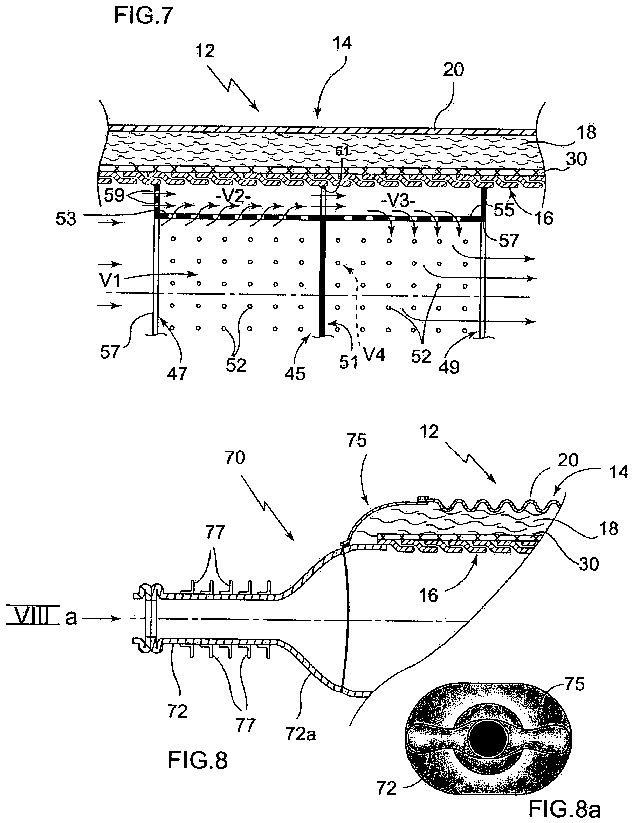

Dans le mode de réalisation illustré à la figure 7, des chicanes acoustiques 45 sont interposés à l'intérieur de l'élément tubulaire interne 16 du conduit 14. Une chicane 45 peut être constituée par l'assemblage de trois disques métalliques, deux disques latéraux amont 47 et aval 49 et un disque central 51, qui sont disposés perpendiculairement à la direction d'écoulement des gaz d'échappement, et deux tubes métalliques de liaison 53 et 55 percés de trous 52 et montés coaxialement à l'élément tubulaire interne 16 mais d'un diamètre inférieur. Plus précisément, le disque latéral amont 47 présente une ouverture centrale 57 au diamètre des deux tubes de liaison 53 et 55, et des ouvertures 59 réparties autour de l'ouverture centrale, alors que le disque latéral aval 49 ne présente qu'une ouverture centrale 57 au diamètre des deux tubes de liaison 53 et 55. Le disque central 51 est plein dans sa partie centrale pour éviter une communication directe entre les deux tubes de liaison 53 et 55, mais présente des ouvertures 61 à sa périphérie. On délimite ainsi un premier volume V₁ à l'intérieur du tube de liaison 53, un deuxième volume annulaire V₂ autour du tube de liaison 53, un troisième annulaire V₃ autour du tube de liaison 55 et un quatrième volume V₄ à l'intérieur du tube de liaison 55. Ainsi, les gaz d'échappement pénètrent directement d'une part, dans le premier volume V₁ par l'ouverture centrale 57 du disque amont 47 puis dans le deuxième volume V₂ par les trous 52 du tube de liaison 53 et, d'autre part, dans le volume V₂ par les trous 59 du disque amont 47. Les gaz d'échappement passent du deuxième volume V₂ au troisième volume V₃ par les ouvertures 61 du disque central 51, puis pénètrent dans le quatrième volume V4 pour les ouvertures 52 du tube de liaison 55 avant de s'échapper de la chicane 45 par l'ouverture centrale 57 du disque aval 49. Plusieurs chicanes 45 peuvent être interposés à l'intérieur de l'élément tubulaire interne 16 du conduit 14.

Sur la figure 8, on a représenté un mode de réalisation d'un dispositif de raccordement 70 monté à l'entrée du conduit 14. D'une manière générale, la sortie du pot catalytique 6 est assurée par un élément tubulaire métallique 72, en acier inoxydable par exemple, dont l'extrémité aval 72a est évasée pour se raccorder au conduit 14 qui à un diamètre supérieur à celui de l'élément tubulaire 72. L'élément tubulaire interne 16 est raccordé par soudage à l'extrémité évasée 72a de l'élément tubulaire 72, alors que l'enveloppe externe 20 du conduit 12 est raccordée au moyen d'une coiffe métallique 75 longue et de faible épaisseur qui a pour fonction de protéger thermiquement l'enveloppe externe 20. Avantageusement, on peut disposer des ailettes de refroidissement 77 externes ou/ou internes sur ou dans l'élément tubulaire 72 pour refroidir les gaz d'échappement avant de rentrer dans le conduit 14 du silencieux 12, et l'enveloppe externe 20 peut être ondulée. Pour favoriser encore les échanges thermiques et réduire la température des gaz d'échappement pénétrant dans le conduit 14, on peut aplatir l'élément tubulaire 72 en lui donnant une forme ondulée ou corruguée, comme cela est visible sur la figure 8a.

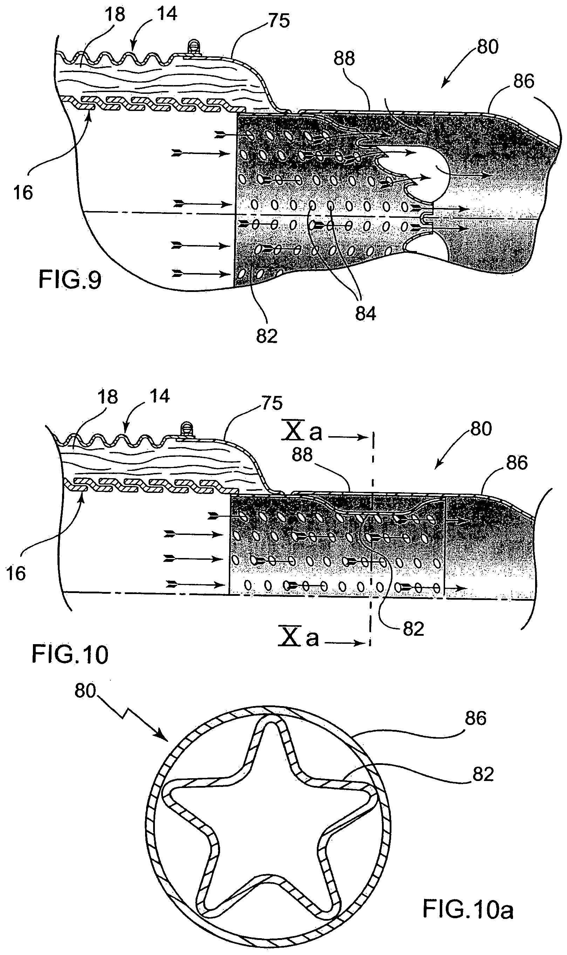

D'une manière générale, les gaz d'échappement doivent être rejetés à une température inférieure à 200°C par exemple, alors qu'à l'entrée du conduit 14 ils peuvent avoir une température de l'ordre de 500°C. Dans le cas où les ailettes de refroidissement 77 du dispositif de raccordement 70 à l'entrée du conduit 14 (figure 8) s'avèrent insuffisantes, on peut monter en sortie du conduit 14 un dispositif de sortie métallique 80 formant un diffuseur. Ce dispositif de sortie 80, comme illustré à la figure 9, peut comprendre au moins un élément 82 de forme globalement conique qui est percé de trous 84, et un élément tubulaire de sortie 86 qui entoure et prolonge l'élément 82. Ainsi, les gaz d'échappement sortent par les trous 84 pour pénétrer dans l'élément tubulaire de sortie 86 qui présente au moins une ouverture 88 dans sa paroi pour permettre une entrée d'air ambiant pour favoriser l'expulsion des gaz d'échappement à une température modérée.

Sur la figure 10, on a illustré un autre mode de réalisation du dispositif de sortie 80 de la figure 9. Ce dispositif de sortie 80 comprend également un élément 82 mais en forme d'étoile, et un élément de sortie 86 qui entoure et prolonge l'élément 82 avec au moins une ouverture 88 dans sa paroi pour permettre une entrée d'air.

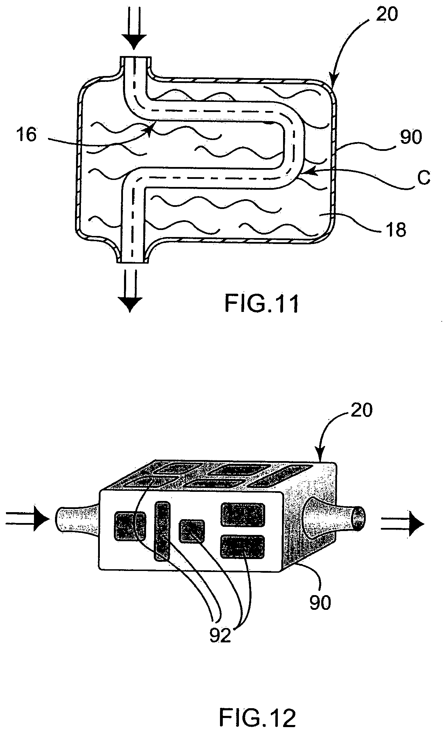

Selon une variante de réalisation de l'invention illustrée à la figure 11, l'enveloppe externe 20 du conduit 14 peut être réalisée, sur une partie au moins du conduit, sous la forme d'une boîte étanche 90 qui est traversée par l'élément tubulaire métallique interne 16 revêtu de son tissu réfractaire 30. Cette boîte 90 est réalisée en deux parties assemblées l'une à l'autre après insertion de l'élément métallique interne 16, la boîte 90 étant remplie par le matelas d'isolation thermique et acoustique 18. L'élément métallique interne 16 peut former au moins un coude C à l'intérieur de la boîte 90 pour augmenter l'isolation acoustique du conduit 14.

Avantageusement, comme cela est illustré sur la figure 12, la paroi de la boîte 90 peut comprendre au moins une surface de résonance 92 sous la forme d'une membrane par exemple ayant sa ou ses fréquences propres qui correspondent à certaines des fréquences du spectre de fréquence à atténuer. Une telle surface 92 si elle vient à être excitée, va se mettre à vibrer et dissiper ainsi de l'énergie de manière à contribuer efficacement à l'isolation acoustique du conduit 14.

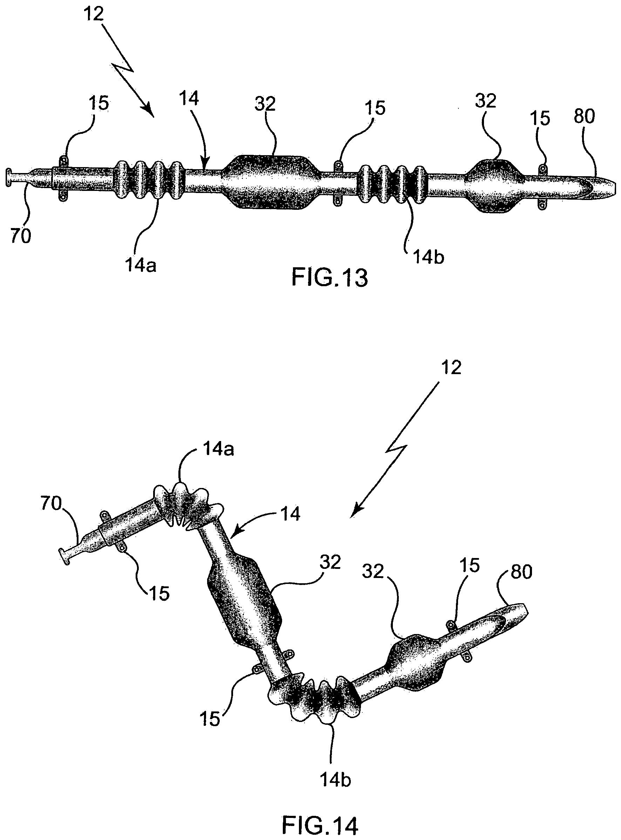

Sur les figures 13 et 14, on a illustré un procédé de montage d'un silencieux 12 selon l'invention dans une ligne d'échappement de véhicule motorisé. D'une manière générale, on fabrique, stocke et transporte un silencieux 12 sous une forme rectiligne. Ensuite, sur le lieu de montage du silencieux 12, on le déforme suivant la configuration géométrique qu'il doit prendre avant de le fixer à la caisse du véhicule par des pattes de fixation rigides 15. Dans l'exemple illustré, le silencieux 12 présente au moins deux séries d'ondulations 14a et 14b et c'est au niveau de ces ondulations 14a et 14b que l'on peut courber le silencieux 12.

Dans les exemples décrits précédemment, le conduit 14 présentait sur sensiblement toute sa longueur un élément métallique interne poreux 16, mais le conduit 14 peut être également réalisé en plusieurs parties qui sont assemblées deux à deux par un élément métallique tubulaire sensiblement lisse qui est relié à deux éléments métalliques poreux adjacents 16, cet élément lisse pouvant être coudé et pouvant ou non être revêtu d'un tissu réfractaire 30, de l'isolant 18 et de l'enveloppe externe 20.

## Revendications

1. Silencieux pour une ligne d'échappement d'un moteur de véhicule, constitué par au moins un conduit (14) qui agit comme guide pour les gaz d'échappement et comme atténuateur acoustique pour les bruits d'échappement, et qui comprend au moins un élément tubulaire métallique interne poreux (16), un matelas intermédiaire d'isolation thermique et acoustique (18), et une enveloppe externe étanche (20) en un matériau polymère, et en ce que l'enveloppe externe (20) se raccorde de manière étanche à deux dispositifs tubulaires métalliques de raccordement (70, 80) par deux coiffes métalliques (75).
**caractérisé en ce que** le matelas intermédiaire d'isolation thermique et acoustique (18) entoure directement ou par l'intermédiaire d'un tissu réfractaire poreux (30) ledit au moins un élément tubulaire métallique interne poreux.

2. Silencieux selon la revendication 1, dans lequel le conduit (14) est souple.

3. Silencieux selon la revendication 1 ou 2, dans lequel l'élément tubulaire métallique interne (16) est constitué par un ressort plat (29) à spires recouvrantes.

4. Silencieux selon la revendication 1 ou 2, dans lequel l'élément tubulaire métallique interne (16) est constitué par un agrafé simple ou double.

5. Silencieux selon l'une des revendications précédentes, dans lequel l'élément tubulaire métallique interne (16) souple ou rigide et est percé d'ouvertures (27).

6. Silencieux selon la revendication 5, dans lequel les ouvertures (27) ont un diamètre croissant dans le sens de l'écoulement des gaz d'échappement.

7. Silencieux selon la revendication 6, dans lequel les ouvertures (27) sont scindés en plusieurs séries d'ouvertures (27a, 27b, 27c), chaque série d'ouvertures ayant sensiblement le même diamètre.

8. Silencieux selon l'une des revendications 5 à 7, dans lequel l'élément tubulaire métallique interne (16) est constitué par au moins deux tubes concentriques interne et externe (25a, 25b) percés d'ouvertures (27).

9. Silencieux selon la revendication 8, dans lequel le tube métallique interne (25a) s'étend sur une partie seulement de la longueur totale du silencieux.

10. Silencieux selon l'une des revendications précédente dans lequel le tissu réfractaire (30) est en fibres de céramique, de basalte ou de verre.

11. Silencieux selon l'une des revendications précédentes, dans lequel l'enveloppe externe (20) du conduit est réalisée à base d'une matière thermoplastique telle du polyamide 66, ou à base d'un matériau élastomère tel du VAMAC® ou un silicone.

12. Silencieux selon l'une des revendications précédentes, dans lequel l'enveloppe externe (20) du conduit est formée par une opération d'extrusion soufflage.

13. Silencieux selon l'une des revendications 1 à 10, dans lequel des volumes annulaires étanches (V) sont ménagés longitudinalement dans le matelas d'isolation thermique et acoustique (18).

14. Silencieux selon la revendication 13, dans lequel chaque volume intermédiaire étanche (V) dans le matelas d'isolation thermique et acoustique (18), est délimité par deux anneaux de compression (40).

15. Silencieux selon la revendication 14, dans lequel chaque anneau de compression (40) est élastique et réalisé en silicone par exemple.

16. Silencieux selon l'une des revendications 1 à 13, dans lequel des chicanes acoustiques (45) sont interposées dans l'élément tubulaire interne (16) du conduit souple (14).

17. Silencieux selon la revendication 16, dans lequel une chicane acoustique (45) est constituée par trois disques (47, 49 et 51) montés perpendiculairement à l'axe d'écoulement des gaz d'échappement, et par deux tubes de liaison (53, 55) présentant des trous (52) coaxiaux à l'élément tubulaire interne (16) et de plus faible diamètre.

18. Silencieux selon l'une des revendications précédentes, dans lequel l'enveloppe externe et étanche (20) présente au moins une excroissance (32) en saillie pour créer un volume supplémentaire (33) qui est rempli par le matériau formant le matelas (18).

19. Silencieux selon la revendication 18, dans lequel la paroi interne de l'excroissance (32) est revêtu d'une garniture absorbante (34).

20. Silencieux selon la revendication 19, dans lequel la garniture absorbante (4) est une mousse alvéolée de silicone.

21. Silencieux selon l'une des revendications précédentes, dans lequel le conduit souple (14) se raccorde en entrée à un dispositif tubulaire de raccordement métallique (70) évasé présentant des ailettes de refroidissement (77) externes et/ou internes pour réduire la température des gaz d'échappement.

22. Silencieux selon l'une des revendications précédentes, dans lequel le conduit souple (14) se raccorde en sortie à un dispositif (80) formant diffuseur pour réduire la température de sortie des gaz d'échappement.

23. Silencieux selon la revendication 22, dans lequel le dispositif de sortie (80) formant diffuseur comprend au moins un élément (82) de forme globalement conique qui est percé de trous (84) et un élément tubulaire de sortie (86) qui entoure et prolonge l'élément (82) et dont la paroi présente au moins une ouverture (88) pour permettre une entrée d'air ambiant.

24. Silencieux selon la revendication 22, dans lequel le dispositif de sortie (80) formant diffuseur comprend au moins un élément (82) de forme étoilée et un élément tubulaire de sortie (86) qui entoure et prolonge l'élément (82) et dont la paroi présente au moins une ouverture (88) pour permettre une entrée d'air ambiant.

25. Silencieux selon l'une des revendications précédentes, dans lequel l'enveloppe externe étanche (20) du silencieux forme une boîte (90) traversée par l'élément tubulaire métallique interne (16), le matelas intermédiaire d'isolation thermique et acoustique (18) remplissant ladite boîte (90).

26. Silencieux selon la revendication 25, dans lequel l'élément tubulaire métallique interne (16) forme au moins un coude à l'intérieur de la boîte (90).

27. Silencieux selon la revendication 25 ou 26, dans lequel la boîte (90) présente sur sa paroi au moins une surface (92) formée par une membrane de résonance qui est accordée sur au moins une fréquence du spectre de fréquence à atténuer.

28. Silencieux selon l'une des revendications précédentes, dans lequel le silencieux comprends au moins deux conduits (14) réunis l'un à l'autre par un élément métallique tubulaire éventuellement coudé.

29. Silencieux selon la revendication 28, dans lequel l'élément métallique tubulaire est lisse.

30. Procédé de montage d'un silencieux tel que défini par l'une des revendications précédentes dans une ligne d'échappement de véhicule motorisé, **caractérisé en ce qu'**il consiste à fabriquer, stocker et transporter le silencieux sous une forme rectiligne, à le déformer selon une configuration donnée au moment de son montage dans la ligne d'échappement, et à le fixer à la caisse du véhicule au moyen de pattes de fixation rigides.

31. Procédé selon la revendication 30, dans lequel le conduit (14) est courbé au niveau d'une zone corruguée (14a et/ou 14b) du conduit.

32. Procédé selon la revendication 30 ou 31, dans lequel l'enveloppe externe étanche (20) du conduit (14) est réalisée par une opération d'extrusion soufflage.

## Patentansprüche

1. Schalldämpfer für eine Abgaslinie eines Motorfahrzeugs, dass er aus mindestens einem Kanal (14) besteht der als Führung für die Abgase dient und als akustischer Dämpfer für die Abgasgeräusche, und der mindestens ein poröses rohrförmiges Metallelement (16), eine zwischenliegende thennische und akustische Isolationsmatte (18) und einen äußeren dichten Mantel (20) aus einem Polymermaterial umfasst, und dadurch, dass der äußere Mantel (20) über zwei Metallkappen (75) dicht an zwei rohrförmige metallische Anschlussvorrichtungen (70, 80) angeschlossen wird,
**dadurch gekennzeichnet, dass** die zwischenliegende thermische und akustische Isolationsmatte (18) direkt oder mittels eines porösen hitzebeständigen Gewebes (30) das mindestens eine poröse interne rohrförmige Metallelement (16) umgibt.

2. Schalldämpfer nach Anspruch 1, wobei der Kanal (14) flexibel ist.

3. Schalldämpfer nach Anspruch 1 oder 2, wobei das interne rohrförmige Metallelement (16) aus einer Flachfeder (29) mit überlagerten Windungen besteht.

4. Schalldämpfer nach Anspruch 1 oder 2, wobei das interne rohrförmige Metallelement (16) aus einer Einfach- oder Doppelschelle besteht.

5. Schalldämpfer nach einem der vorherigen Ansprüche, wobei das interne rohrförmige Metallelement (16) flexibel oder starr ist und mit Öffnungen (27) durchbohrt ist.

6. Schalldämpfer nach Anspruch 5, wobei die Öffnungen (27) einen zunehmenden Durchmesser in Durchflussrichtung der Abgase aufweist.

7. Schalldämpfer nach Anspruch 6, wobei die Öffnungen (27) in mehrere Öffnungsreihen (27a, 27b, 27c) unterteilt sind, wobei jede Öffnungsreihe im Wesentlichen den gleichen Durchmesser aufweist.

8. Schalldämpfer nach einem der Ansprüche 5 bis 7, wobei das interne rohrförmige Metallelement (16) aus mindestens zwei konzentrischen internen und äußeren Rohren (25a, 25b) besteht, die mit Öffnungen (27) durchbohrt sind.

9. Schalldämpfer nach Anspruch 8, wobei sich das interne Metallrohr (25a) nur über einen Teil der Gesamtlänge des Schalldämpfers erstreckt.

10. Schalldämpfer nach einem der vorherigen Ansprüche, wobei das hitzebeständige Gewebe (30) aus Keramik-, Basalt- oder Glasfasern ist.

11. Schalldämpfer nach einem der vorherigen Ansprüche, wobei der äußere Mantel (20) des Kanals auf Grundlage eines thermoplastischen Materials, wie z. B. Polyamid 66, oder auf Grundlage eines Elastomermaterials, wie z. B. VAMAC® oder aus einem Silikon ausgeführt ist.

12. Schalldämpfer nach einem der vorherigen Ansprüche, wobei der äußere Mantel (20) des Kanals durch einen Extrusionsblasform-Vorgang ausgeführt ist.

13. Schalldämpfer nach einem der Ansprüche 1 bis 10, wobei dichte ringförmige Volumen (V) in Längsrichtung in der thermischen und akustischen Isolationsmatte (18) angeordnet sind.

14. Schalldämpfer nach Anspruch 13, wobei jedes dichte Zwischenvolumen (V) in der thermischen und akustischen Isolationsmatte (18) durch zwei Kompressionsringe (40) begrenzt ist.

15. Schalldämpfer nach Anspruch 14, wobei jeder Kompressionsring (40) elastisch und beispielsweise aus Silikon ausgeführt ist.

16. Schalldämpfer nach einem der Ansprüche 1 bis 13, wobei akustische Leitplatten (45) in dem internen Rohrelement (16) des flexiblen Kanals (14) zwischengestellt sind.

17. Schalldämpfer nach Anspruch 16, wobei eine akustische Leitplatte (45) aus drei Scheiben (47, 49 und 51) besteht, die senkrecht zur Strömungsachse der Abgase montiert ist, und aus zwei Verbindungsrohren (53, 55) besteht, die Löcher (52) koaxial zu dem internen Rohrelement (16) und mit dem kleinsten Durchmesser aufweist.

18. Schalldämpfer nach einem der vorherigen Ansprüche, wobei der äußere und dichte Mantel (20) mindestens eine überstehende Ausstülpung (32) aufweist, um ein zusätzliches Volumen (33) zu schaffen, das durch das Material gefüllt ist, das die Matte (18) bildet.

19. Schalldämpfer nach Anspruch 18, wobei die Innenwand der Ausstülpung (32) mit einer absorbierenden Auskleidung (34) beschichtet ist.

20. Schalldämpfer nach Anspruch 19, wobei die absorbierende Auskleidung (4) ein wabenförmiger Silikonschaumstoff ist.

21. Schalldämpfer nach einem der vorherigen Ansprüche, wobei der flexible Kanal (14) am Einlass an eine rohrförmige Vorrichtung mit aufgeweitetem Metallanschluss (70) angeschlossen wird, der äußere und/oder interne Kühlrippen (77) aufweist, um die Temperatur der Abgase zu reduzieren.

22. Schalldämpfer nach einem der vorherigen Ansprüche, wobei der flexible Kanal (14) am Auslass an eine Vorrichtung (80) angeschlossen wird, die einen Diffusor bildet, um die Auslasstemperatur der Abgase zu reduzieren.

23. Schalldämpfer nach Anspruch 22, wobei die Auslassvorrichtung (80), die einen Diffusor bildet, mindestens ein Element (82) mit einer generell kegelförmigen Form umfasst, das mit Löchern (84) durchbohrt ist, und ein rohrförmiges Auslasselement (86), das das Element (82) umgibt und verlängert, und dessen Wand mindestens eine Öffnung (88) aufweist, um einen Eintritt von Umgebungsluft zu erlauben.

24. Schalldämpfer nach Anspruch 22, wobei die Auslassvorrichtung (80), die einen Diffusor bildet, mindestens ein Element (82) mit einer sternförmigen Form umfasst, und ein rohrförmiges Auslasselement (86), das das Element (82) umgibt und verlängert, und dessen Wand mindestens eine Öffnung (88) aufweist, um einen Eintritt von Umgebungsluft zu erlauben.

25. Schalldämpfer nach einem der vorherigen Ansprüche, wobei der äußere dichte Mantel (20) des Schalldämpfer ein Gehäuse (90) bildet, das von dem internen rohrförmigen Metallelement (16) durchquert wird, wobei die zwischenliegende thermische und akustische Isolationsmatte (18) das Gehäuse (90) füllt.

26. Schalldämpfer nach Anspruch 25, wobei das interne rohrförmige Metallelement (16) mindestens einen Bogen im Innern des Gehäuses (90) bildet.

27. Schalldämpfer nach Anspruch 25 oder 26, wobei das Gehäuse (90) auf seiner Wand mindestens eine Fläche (92) aufweist, die durch eine Resonanzmembran gebildet ist, die auf mindestens eine Frequenz der abzuschwächenden Frequenzspektrums abgestimmt ist.

28. Schalldämpfer nach einem der vorherigen Ansprüche, wobei der Schalldämpfer mindestens zwei Kanäle (14) umfasst, die miteinander durch ein möglicherweise gebogenes rohrförmiges Metallelement verbunden sind.

29. Schalldämpfer nach Anspruch 28, wobei das rohrförmige Metallelement glatt ist.

30. Montageverfahren eines Schalldämpfers, wie er nach einem der vorherigen Ansprüche in einer Abgaslinie eines motorisierten Fahrzeugs definiert ist, **dadurch gekennzeichnet, dass** es aus dem Herstellen, Lagern und Transportieren des Schalldämpfers mit einer geradlinigen Form, seinem Verformen gemäß einer gegebenen Konfiguration im Moment seiner Montage in die Abgaslinie und seinem Befestigen an der Karosserie des Fahrzeugs mittels starrer Befestigungslaschen besteht.

31. Verfahren nach Anspruch 30, wobei der Kanal (14) auf Ebene eines gewellten Bereichs (14a und/oder 14b) des Kanals gebogen ist.

32. Verfahren nach Anspruch 30 oder 31, wobei der äußere dichte Mantel (20) des Kanals (14) durch einen Extrusionsblasform-Vorgang ausgeführt ist.

## Claims

1. A silencer for a vehicle engine exhaust system, constituted by at least one duct (14) which acts as a guide for exhaust gas and as an acoustic attenuator for exhaust noise, and which comprises at least one porous internal metal tubular element (16), an intermediate thermal and acoustic lagging (18), and a leaktight outer covering (20) of polymer material, and in that the outer covering (20) is connected in leaktight manner to two tubular metal connection devices (70, 80) via two metal caps (75), **characterized in that** the intermediate thermal and acoustic lagging (18) surrounds directly or by means of a porous refractory fabric (30) said at least one porous internal metal tubular element (16).

2. A silencer according to claim 1, in which the duct (14) is flexible.

3. A silencer according to claim 1 or 2, in which the internal metal tubular element (16) is constituted by a flat spring (29) having overlapping turns.

4. A silencer according to claim 1 or 2, in which the internal metal tubular element (16) is constituted by a sheet metal tube with single or double seam joints.

5. A silencer according to any one of preceding claims, in which the flexible or rigid internal metal tubular element (26) is pierced by openings (27).

6. A silencer according to claim 5, in which the openings (27) are of diameter that increases in the flow direction of the exhaust gas.

7. A silencer according to claim 6, in which the openings (27) are subdivided into a plurality of series of openings (27a, 27b, 27c), the openings in each series having substantially the same diameter.

8. A silencer according to any one of claims 5 to 7, in which the internal metal tubular element (16) is constituted by at least two concentric tubes, an inner tube and an outer tube (25a, 25b), both pierced by openings (27).

9. A silencer according to claim 8, in which the inner metal tube (25a) extends over a portion only of the total length of the silencer.

10. A silencer according to any one of preceding claims, in which the refractory fabric (30) is made of ceramic, basalt, or glass fibers.

11. A silencer according to any one of preceding claims, in which the outer covering (20) of the duct is made on the basis of a thermoplastic material such as polyamide 66, or on the basis of an elastomer material such as Vamac®, or a silicone.

12. A silencer according to any one of preceding claims, in which the outer covering (20) of the duct is formed by a blow extrusion operation.

13. A silencer according to any one of claims 1 to 10, in which leaktight annular volumes (V) are formed that are spaced apart longitudinally in the thermal and acoustic lagging (18).

14. A silencer according to claim 13, in which each leaktight intermediate volume (V) in the thermal and acoustic lagging (18) is defined by two compression rings (40) .

15. A silencer according to claim 14, in which each compression ring (40) is resilient and made of silicone, for example.

16. A silencer according to any one of preceding claims 1 to 13, in which acoustic baffles (45) are interposed in the internal tubular element (16) of the flexible duct (14) .

17. A silencer according to claim 16, in which an acoustic baffle (45) is constituted by three disks (47, 49, 51) mounted perpendicularly to the exhaust gas flow axis, and by two connection tubes (53, 55) presenting holes (52) that are coaxial with the internal tubular element (16) and that are of smaller diameter.

18. A silencer according to any one of preceding claims, in which the leakproof outer covering (20) presents at least one outwardly-directed projection (32) to create an additional volume (33) which is filled with the material forming the lagging (18).

19. A silencer according to claim 18, in which the inside wall of the projection (32) is covered in an absorbent lining (34).

20. A silencer according to claim 19, in which the absorbent lining (4) is a cellular silicone foam.

21. A silencer according to any one of preceding claims, in which the flexible duct (14) has its entrance connected to a flared tubular metal connection device (70) presenting internal and/or external cooling fins (77) to reduce the temperature of the exhaust gas.

22. A silencer according to any one of preceding claims, in which the flexible duct (12) is connected at its exit to a diffuser-forming device (80) for reducing the exit temperature of the exhaust gas.

23. A silencer according to claim 22, in which the diffuser-forming exit device (80) comprises at least one generally conical element (82) that is pierced by holes (84), and a tubular exit element (86) which surrounds and extends the element (82), and having a wall that presents at least one opening (88) for enabling ambient air to enter therein.

24. A silencer according to claim 22, in which the diffuser-forming exit device (80) comprises at least one star-shaped element (82) and an exit tubular element (86) which surrounds and extends the element (82), and having a wall that presents at least one opening (88) for allowing ambient air to enter therein.

25. A silencer according to any one of preceding claims, in which the leakproof outer covering (20) of the silencer forms a box (90) through which the internal metal tubular element (16) passes, the intermediate thermal and acoustic lagging filling said box.

26. A silencer according to claim 25, in which the internal metal tubular element (16) forms at least one bend inside the box (90).

27. A silencer according to claim 25 or 26, in which the box (90) presents in its wall, at least one surface (92) formed by a resonant membrane which is tuned to at least one frequency in the frequency spectrum to be attenuated.

28. A silencer according to any one of preceding claims, in which the silencer comprises at least two ducts (14) connected to each other by an optionally bent tubular metal element.

29. A silencer according to claim 28, in which the tubular metal element is smooth.

30. A method of mounting a silencer as defined in any one of preceding claims in a motor vehicle exhaust system, the method consisting in manufacturing, storing, and transporting the silencer in rectilinear shape, in deforming it to take up a given configuration at the time it is mounted in the exhaust system, and in fastening it to the vehicle body by means of rigid fastening tabs.

31. A method according to claim 30, in which the duct (14) is bent at a corrugated zone (14a and/or 14b) of the duct.

32. A method according to claim 30 or 31, in which the leakproof outer covering (20) of the duct (14) is made by a blow extrusion operation.
